# EUROPÄISCHE PATENTSCHRIFT

(11) **EP 1 800 927 B1**
(45) Veröffentlichungstag und Bekanntmachung des Hinweises auf die Patenterteilung: **01.09.2010**
(21) Anmeldenummer: 06026732.5
(22) Anmeldetag: 22.12.2006
(51) Int. Cl.: B60J 7/057, F16D 1/033, F16D 1/076

(54) **Verdeckantrieb**
Drive for a folding roof
Dispositif d'entraînement pour capote

(30) Priorität: 24.12.2005 DE 102005062301
(43) Veröffentlichungstag der Anmeldung: 27.06.2007
(73) Patentinhaber: Dr. Ing. h.c. F. Porsche AG, 70435 Stuttgart (DE)
(72) Erfinder: Küstner, Markus, 71636 Ludwigsburg (DE); Kleemann, Klaus, 75217 Birkenfeld (DE); Ranft, Detlev, 76275 Ettlingen (DE); Gross, Beatrix, 70469 Stuttgart (DE)

(56) Entgegenhaltungen:
- EP-A- 1 116 849
- DE-A1- 19 755 970
- DE-A1- 19 909 489
- JP-A- 60 088 663
- US-A- 2 803 146
- US-A- 5 699 582

## Beschreibung

Die Erfindung betriff einen Verdeckantrieb für ein Kraftfahrzeug mit einer Getriebeanordnung zum Antrieb einer Abtriebswelle, welche über einen Antriebshebel mit einem Verdeckgestänge verbunden ist.

Ein derartiger Verdeckantrieb ist beispielsweise durch die DE 199 09 489 A1 bekannt geworden. Aus der EP 1 116 849 A2, die einen Verdeckantrieb nach dem Oberbegriff des Anspruchs 1 offenbart, ist eine Betätigungsanordnung für schwenkbare Teile an Fahrzeugen bekannt, wobei die Verschwenkung über ein Fluidmotor erfolgt, der eine Drehwelle aufweist, welche mit einem Hebel über eine Verzahnung verbunden ist. Des Weiteren ist aus der DE 197 55 970 A1 eine Wellenkupplung bekannt, welche an einem Wellenteil eine Ausnehmung aufweist, in die ein Vorsprung eines weiteren Wellenteils zur Positionierung einsetzbar ist.

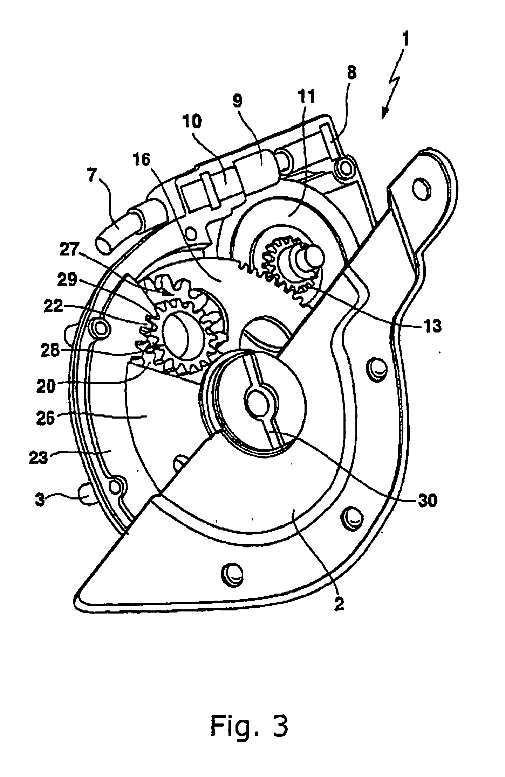

Gemäß Figur 3 umfasst ein Verdeckantrieb 1 einen Gehäusedeckel 2, an dem die wesentlichen Antriebselemente des Verdeckantriebs 1 befestigt und durch ein Gehäuse 3 nach außen geschützt sind. Innerhalb einer Ummantelung ist eine flexible Antriebswelle 7 geführt, die durch einen Elektromotor angetrieben werden kann. Zwischen einer ersten Lagerschale und einer weiteren zweiten Lagerschale ist eine Schnecke 9 angeordnet, die mit der Antriebswelle verbunden ist. Die Schnecke 9 greift in ein Schneckenrad ein. Das Schneckenrad ist mit einer Zahnwelle verbunden, deren Zähne in Zähne eines Stirnrades eingreifen. Das Stirnrad ist mit einem Sonnenrad verbunden, das Teil eines Planetengetriebes ist. Das Getriebe dient dazu, die Rotation der

Antriebswelle 7 in eine Rotation der Abtriebswelle **30** zu untersetzen und das Drehmoment zu verstärken.

Aufgabe der Erfindung ist es, eine verbesserte Ankopplung der Abtriebswelle an einen Antriebshebel des Verdeckantriebs zu erreichen, durch die die Kraftübertragung dauerhaft verbessert ist.

Diese Aufgabe wird durch einen Verdeckantrieb gemäß Patentanspruch 1 gelöst, bei dem die Abtriebswelle und der Antriebshebel eine Verzahnung aufweisen, mithilfe derer die Abtriebswelle und der Antriebshebel verdrehsicher und spielfrei miteinander gekoppelt sind. Die Verzahnung ist eine Hirth-Verzahnung und ist stirnseitig an Abtriebswelle und Antriebshebel integriert werden.

Ein bevorzugtes Ausführungsbeispiel der Erfindung ist in den Figuren der schematischen Zeichnung dargestellt und wird anhand der
Figuren erläutert. **Es zeigt**:
   - **Figur 1**: eine perspektivische Darstellung der Abtriebswelle;
   - **Figur 2**: eine perspektivische Darstellung des Antriebshebels;
   - **Figur 3**: eine perspektivische Darstellung des bekannten Verdeckantriebs (Stand der Technik).

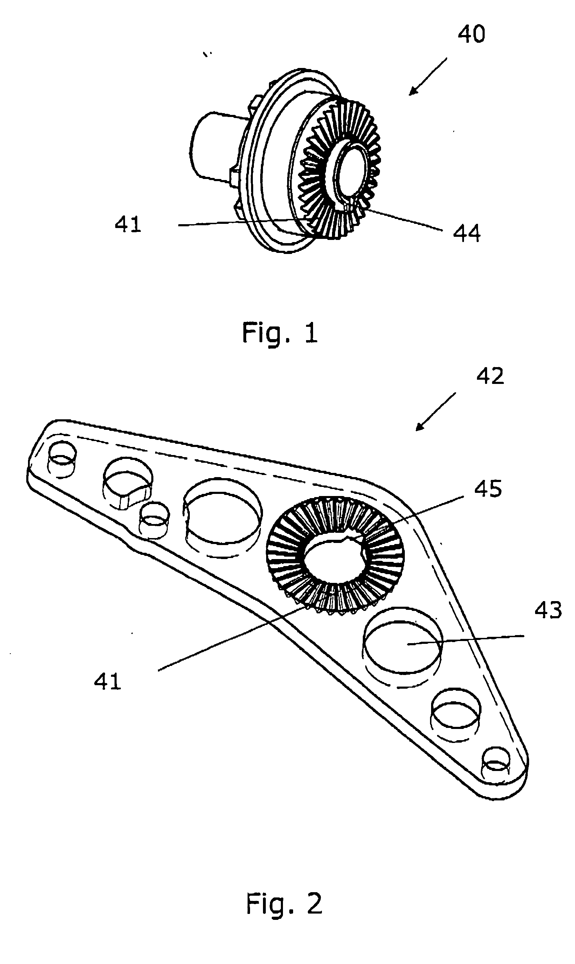

**Figur 1** zeigt eine Abtriebswelle **40,** welche im Wesentlichen der Abtriebswelle 30 des Stands der Technik (Figur 3) entspricht. Die Abtriebswelle 40 wird in gleicher Weise mithilfe des Planetengetriebes angetrieben. Aus der Figur 1 ist ersichtlich, dass die Abtriebswelle 40 an ihrer Planseite eine Hirth-Verzahnung **41** und zur Vororientierung eine Nocke **44** aufweist.

**Figur 2** zeigt einen mit der Abtriebswelle 40 antreibbaren Antriebshebel **42,** welcher Bohrungen **43** aufweist, um den Antriebshebel 42 mit einem Verdeckgestänge zu verbinden. Der Antriebshebel 42 weist ebenfalls eine Verzahnung 41 und eine Nut zur Vororientierung **45** auf, um eine formschlüssige Verbindung mit der Abtriebswelle zu erreichen.

## Patentansprüche

1. Verdeckantrieb mit einer Getriebeanordnung zum Antrieb einer Abtriebswelle (40), welche über eine Verzahnung mit einem Antriebshebel (41) verbunden und an dem ein Verdeckgestänge befestigt ist, **dadurch gekennzeichnet, dass** die Abtriebswelle (40) und der Antriebshebel (41) jeweils eine Hirth-Verzahnung aufweisen, wobei die eine Hirth-Verzahnung stirnseitig an der Antriebswelle (40) angeordnet ist, welche in die mittig des Antriebshebels (41) angeordnete weitere Hirth-Verzahnung eingreift und mit Hilfe der Hirth-Verzahnungen die Antriebswelle (40) und der Antriebshebel (41) verdrehsicher und spielfrei miteinander gekoppelt sind.

2. Verdeckantrieb nach Anspruch 1, **dadurch gekennzeichnet, dass** eine oder mehrere Nocken (44) und Nuten (45) zur Vororientierung der Position des Antriebshebels (41) zur Abtriebswelle (40) vorgesehen sind.

## Claims

1. Drive for a folding roof, with a gearing arrangement for driving an output shaft (40) which is connected to a drive lever (41) via a toothing and to which a folding roof linkage is fastened, **characterized in that** the output shaft (40) and the drive lever (41) each have a serration, wherein one serration is arranged on the end side of the output shaft (40) and engages in the other serration arranged in the centre of the drive lever (41), and the output shaft (40) and the drive lever (41) are coupled to each other in a manner secure against rotation and in a manner free from play with the aid of the serrations.

2. Drive for a folding roof according to Claim 1, **characterized in that** one or more cams (44) and grooves (45) are provided for pre-orienting the position of the drive lever (41) with respect to the output shaft (40).

## Revendications

1. Dispositif d'entraînement pour capote, comprenant un agencement de transmission pour l'entraînement d'un arbre de sortie (40), qui est connecté par le biais d'une denture à un levier d'entraînement (41) et auquel est fixée une tringlerie de capote, **caractérisé en ce que** l'arbre de sortie (40) et le levier d'entraînement (41) présentent à chaque fois une denture de Hirth, l'une des dentures de Hirth étant disposée du côté frontal sur l'arbre de sortie (40) qui vient en prise dans l'autre denture de Hirth disposée au milieu du levier d'entraînement (41) et à l'aide des dentures de Hirth, l'arbre de sortie (40) et le levier d'entraînement (41) sont accouplés de manière imperdable et sans jeu l'un à l'autre.

2. Dispositif d'entraînement de capote selon la revendication 1, **caractérisé en ce qu'**une ou plusieurs cames (44) et rainures (45) sont prévues pour la pré-orientation de la position du levier d'entraînement (41) par rapport à l'arbre de sortie (40).
